Europäisches Patentamt

European Patent Office

Office européen des brevets

(11) Publication number: **0 125 335**
**B1**

(12) **EUROPEAN PATENT SPECIFICATION**

(45) Date of publication of patent specification: **06.05.87**

(51) Int. Cl.⁴: **G 09 B 23/18**

(21) Application number: **83104835.0**

(22) Date of filing: **17.05.83**

(54) **A kit for the assembly of electrical circuits.**

(43) Date of publication of application:
**21.11.84 Bulletin 84/47**

(45) Publication of the grant of the patent:
**06.05.87 Bulletin 87/19**

(84) Designated Contracting States:
**AT BE CH DE FR GB IT LI NL SE**

(56) References cited:
**DE-A-1 959 943**
**FR-A-1 547 183**
**FR-A-1 562 114**
**US-A-2 878 587**
**US-A-3 175 304**

(73) Proprietor: **Salit, Yechiel**
**12 Alexander Yanai Street**
**Tel-Aviv (IL)**

(72) Inventor: **Salit, Yechiel**
**12 Alexander Yanai Street**
**Tel-Aviv (IL)**

(74) Representative: **Bernhardt, Klaus**
**Radeckestrasse 43**
**D-8000 München 60 (DE)**

Courier Press, Leamington Spa, England.

## Description

The present invention relates to kits for the assembling of electrical or electronic circuitry, particularly for didactical or instructional purposes, namely at schools or for electronics hobbyists.

There is known a large variety of electrical or electronic kits for the above uses, however, all these known assemblies are either of a primitive construction, usually comprising plug-in boards wherein clips and clamps are required for establishing electrical contact between the various components (e.g. FR—A—1 562 114), or, where more sophisticated systems are concerned, they require higher skill and special equipment, such as lead solders, for building even the most simple circuit, e.g. DE—A—19 59 943, which discloses a kit for the assembly of electrical circuitry, particularly for didactical purposes, including, a selection of electrical or electronics components, the components being mounted on prismatic blocks made of a rigid, electrical insulating material having a bottom, side and top surfaces, metallic sockets installed within the blocks, means for releasably fastening the electrical or electronic components to the blocks thereby establishing electrical connection between terminals of said components and said sockets, and openings formed in the blocks for the insertion of wire plugs thereinto.

It is therefore the object of the present invention to devise a modular multi-purpose kit comprised of easy-to-handle components without the need for special equipment and tools.

According to the invention, this object is achieved by changing a kit such as known from DE—A—19 59 943 in such a manner that each component is mounted on an insulated board having extensions of a conductive material to which the component's terminals are electrically connected; the boards are adapted to be interchangeably and releasably mounted on the top surface of one of said prismatic blocks, said boards are releasably fastened to the blocks by means of said fastening means in a manner establishing electrical connection between a conductive extension of a board and a socket; and said openings for the insertion of wire plugs thereinto are formed in side surfaces of the block and in each socket. With this changed design, it is possible to exchange components without disrupting the assembled circuit and still make reliable electrical connections without the need for special equipment and tools, and moreover one can do with a rather limited number of comparatively expensive and space consuming blocks, and yet one is able to employ a much larger selection of components by storing a supply of boards with components mounted thereon.

Preferably, the boards are made from a printed-circuit panel whereby the conductive extensions are strips prepared by etching. In that case, the blocks may have a recessed top surface for receiving the boards, and then said fastening means may be screws received through holes in the boards into tapped bores formed in said sockets. In this latter embodiment, the conductive extensions may be in abutting contact with the sockets and/or the holes may be encircled by crimped metal eyelets, the eyelets being in electrical contacts with the conductive extensions and/ or the sockets may be cylindrical, inserted into blind bores formed in the block.

Much more readily as with prior art kits, in the kit according to the invention the components may comprise multiple-terminal components, such as resistors, transistors and integrated circuits; while much as with prior art kit it may include a junction block comprising a single socket with four of said openings. Deviating from prior art kits, however, it is contemplated to provide, in the kit according to the invention, the openings in the blocks with a coloured polarity indicating washer.

Two embodiments of the invention are shown in the accompanying drawings, wherein:—

Figure 1 is a three-dimensional view of a base-block of the kit according to one embodiment of the invention;

Figure 2 is a longitudinal cross-sectional view of the block of Fig. 1;

Figure 3 is a top view of the block of Fig. 1;

Figure 4 is a cross-sectional view of the block of Fig. 3;

Figure 5 is a three-dimensional view of a socket incorporated in the block of Figs. 1—4;

Figures 6a, 6b and 6c are, respectively, top, side and bottom views of a printed circuit board with a resistor mounted thereon;

Figure 7 is a three-dimensional view of a block with the resistor board before assembling same to the block;

Figure 8 is a block assembled with the resistor board of Fig. 7;

Figure 9 is a cross-sectional view of Fig. 8;

Figure 10 shows a board with a light emitting diode mounted thereon;

Figure 11 shows a board with a switch mounted thereon;

Figure 12 shows a wire with plugs for the assembly of blocks into an electrical circuit;

Figures 13a and 13b are, respectively, a schematic diagram and a physical form of a simple circuit built from the kit according to the present invention;

Figure 14 shows a complete mounting of a transistor on a block;

Figure 15 shows a block serving a three-or four-points junction;

Figure 16 shows an integrated circuit component mounted on a block.

Figure 17 shows a modified form of block and resistor board assembly;

Figure 18 is a side-view of the resistor board of Fig. 17; and

Figure 19 is a cross-section of the assembled block and board of Figs. 17 and 18.

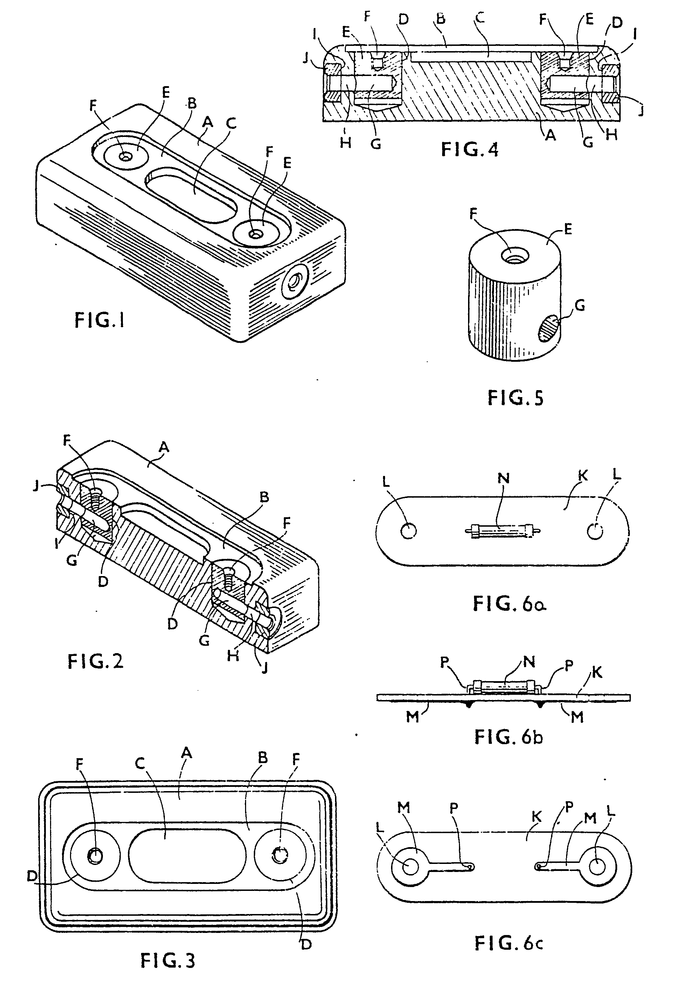

Any circuit built of the kit according to the present invention will be composed of any suitable number of "building-bricks" constituted by the prismatic blocks marked A illustrated in the drawings. Hence, in Figs. 1—4, the blocks A are made of a rigid, electrically insulating material, preferably wood, and being more-or-less of a size of a matchbox for the easy handling thereof even by young students. At the top surface of the block A there is formed a recess B of a generally rectangular (or other) shape, and a second, smaller recess C, for purposes to be described later.

Snugly fitted in blind bores D there are two cylindrical metallic sockets E (see Fig. 5) each having a tapped, axial bore F and a radial, blind bore G.

Bores G are in alignment with bores H having a sunk shoulder I forming a seat for a coloured, polarity identification plastic washer J fitted into the opposite, short side-walls of the block A.

This completes the basic "building-brick" of the kit.

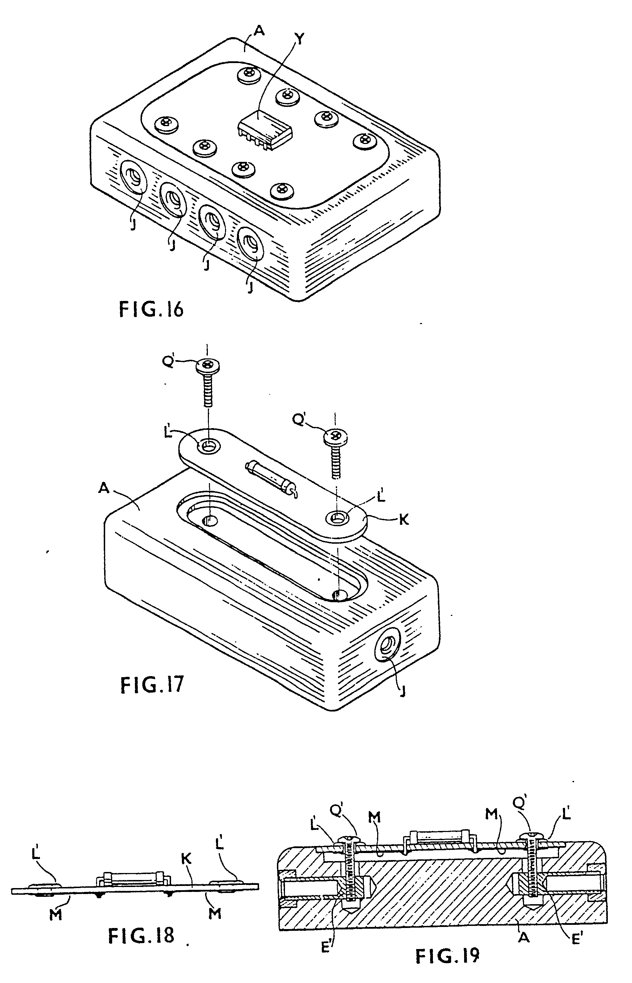

As shown in Figs. 6a—6c, there is provided a board or small plate K of an electrically insulated material, which board is preferably punched-out of standard printed-circuit board or panel and conforms the shape and size of the recess B. Board K has two holes L at its sides, (which may be encircled by metallic eyelets denoted L' in Figs. 17—19).

As best seen in Figs. 6c, a pair of conductive strips M are formed (by etching if a printed circuit panel is used) at the bottom side of the board, preferably around the holes L with an extension towards the center of the board. A resistor N is mounted on the other, top-side of the board K, with legs P penetrating the board and soldered each to one of the conductive strips M.

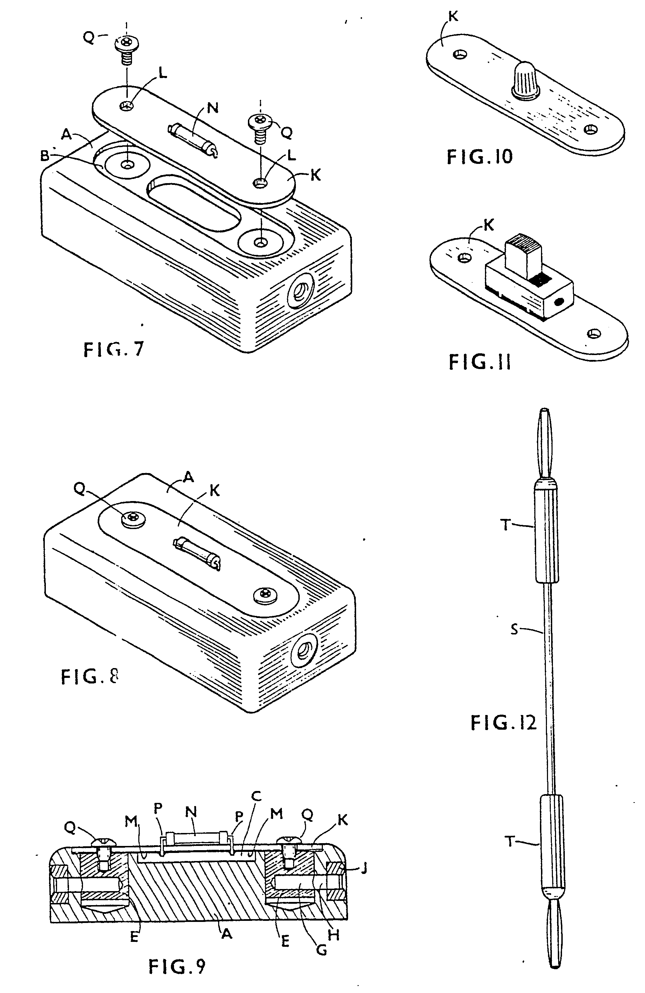

The resistor printed-circuit board K is adapted to be assembled or affixed onto the block A (see Fig. 7), fitting into the cavity or recess B, by a pair of screws Q, as shown in Figs. 8 and 9. Cavity C thus leaves room for the soldered legs P, while the board K is neatly seated within the cavity B.

An electrical connection is thus formed between the resistor legs P, through strips M (and eyelets L'), to the metallic sockets E.

Obviously, such mounting of the board K on a block A is a most simple operation, readily performed using a screwdriver, even by small children. Alternatively, any other suitable, quick and simple fastening means may be employed, such as friction plugs.

Further according to the present invention, there are provided in a similar manner plates or boards K carrying various other electrical or electronic components such as a light emitting diode (Fig. 10) or a switch as shown in Fig. 11.

Bendable wires S, having plugs T (Fig. 12) will be supplied with the kit and used for connecting the blocks A one to another, as required for building any specific circuit, following the diagrammatic representation thereof.

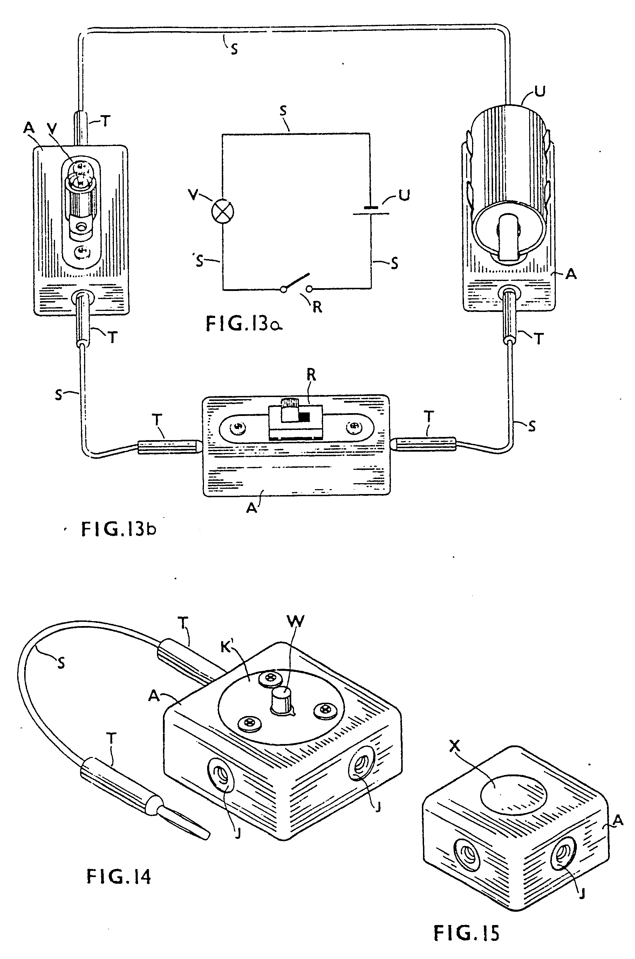

A simple example of use of the invention is illustrated in Figs. 13a and 13b: A power source in the form of a battery U is connected via the switch R to a bulb socket V by the wiring S. The resemblance of the physical circuit, built-up of the components according to the present invention, to the schematic diagram of the circuit shown in Figs. 13a is striking. This, together with the most simple handling and assembling procedures required for building the circuit, emphasizes the advantage of the present invention from all aspects.

Fig. 14 illustrates the assembly of a three-legs component, such as transistor W, on a block A comprising three metallic sockets (not shown) underside a circular board K', electrically connected by the printed circuit strips (not shown) to the legs of the transistor W. The blocks A for this purpose will comprise three plug-in washers 3 for the three plugs T of the wires S.

Fig. 15 shows a similar block A with a central single metallic socket X serving a junction for three or four wires, where connections in parallel are required.

Lastly, there is exemplified in Fig. 16 the mounting of an I.C. (Integrated Circuit) component Y with eight legs to a base block A in a similar manner as with respect to the more simple components.

It has thus been established that the kit devised according to the present invention paves the way to a great many possibilities, from the most simple wirings to more complicated circuits, using a limited number of the more-expensive blocks A and a larger stock of the less-expensive electronic components each associated with a printed circuit board, such boards being readily exchangeably mountable on the blocks.

For assembling a specific circuit, all that is needed is to tighten a number of screws and plug-in a number of wires, and the circuit is completed. It would also be noted that the screw heads constitute convenient testing points of the circuit.

It will be readily understood by those skilled in the art that the invention as heretofore exemplified may be executed in other, modified manners, especially regarding the geometrical shapes of the blocks and printed circuit boards, and the method of mounting the boards on the blocks. Thus, in Figs. 17—19, a modified embodiment of the invention is illustrated employing differently designed metallic socket members E' (Fig. 19) electrically as-well-as mechanically connected to the printed-circuit board K through and by the screws Q'. To ensure good connection, metal eyelet members L' should be provided, crimped around the holes L in contact with the circular portion of the conductive strips M (see Fig. 6c).

**Claims**

1. A kit for the assembly of electrical circuitry, particularly for didactical purposes, including a selection of electrical or electronics components (N, R, U, V, W), the components being mounted on prismatic blocks (A) made of a rigid, electrical insulating material having a bottom, side and top surfaces, metallic sockets (E) installed within the blocks (A), means (Q, F) for releasably fastening the electrical or electronic components (N, R, U, V, W) to the blocks (A) thereby establishing electrical connection between terminals (P) of said components (N, R, U, V, W) and said sockets (E), and openings (H, G) formed in the blocks (A) for the insertion of wire plugs (T) thereinto, characterized in that each component is mounted on an insulated board (K) having extensions (M) of a conductive material to which the component's terminals (P) are electrically connected; the boards are adapted to be interchangeably and releasably mounted on the top surface of one of said prismatic blocks (A), said boards (K) are releasably fastened to the blocks (A) by means of said fastening means (Q, F) in a manner establishing electrical connection between a conductive extension (M) of a board (K) and a socket (E); and said openings (H, G) for the insertion of wire plugs (T) thereinto are formed in side surfaces of the block (A) and in each socket (E).

2. The kit as claimed in Claim 1 wherein the boards (K) are made from a printed-circuit panel whereby the conductive extensions are strips (M) prepared by etching.

3. The kit as claimed in Claim 2 wherein the blocks (A) have a recessed top surface (B) for receiving the boards (K).

4. The kit as claimed in Claim 3 wherein said fastening means are screws (Q) received through holes (L) in the boards into tapped bores (F) formed in said sockets (E).

5. The kit as claimed in Claim 4 wherein the conductive extensions (M) are in abutting contact with the sockets (E).

6. The kit as claimed in Claim 4 wherein the holes (L) are encircled by crimped metal eyelets (L'), the eyelets being in electrical contacts with the conductive extensions (M).

7. The kit as claimed in Claim 4 wherein said sockets (E) are cylindrical, inserted into blind bores formed in the block.

8. The kit as claimed in Claim 1 wherein said components are multiple-terminal components, such as resistors, transistors and integrated circuits.

9. The kit as claimed in Claim 1 further including a junction block (X) comprising a single socket with four of said openings.

10. The kit as claimed in Claim 1 wherein said openings are provided with a coloured polarity indicating washer (J).

**Patentansprüche**

1. Bausatz zum Aufbau elektrischer Schaltungen, insbesondere für Lehrzwecke, mit einer Auswahl von elektrischen oder elektronischen Bauelementen (N, R, U, V, W), die auf prismatische Blöcke (A) aus festem, elektrisch isolierenden Werkstoff montiert sind, die eine Bodenfläche, Seitenflächen und eine Deckfläche haben, metallischen Buchsen (E), die in die Blöcke (A) eingebaut sind, Mittel (Q, F) zum lösbaren Befestigen der elektrischen oder elektronischen Bauelemente (N, R, U, V, W) an den Blöcken (A), wobei eine elektrische Verbindung zwischen den Anschlüssen (P) der Bauelemente (N, R, U, V, W) und den Fassungen (E) hergestellt wird, und Öffnungen (H, G), die in den Blöcken (A) zum Einsetzen von Leitungssteckern (T) gebildet sind, dadurch gekennzeichnet, daß jedes Bauelement auf eine Isolierplatte (K) montiert ist, die Ansätze (M) aus leitendem Material aufweist, an die die Bauelementeanschlüsse (P) elektrisch angeschlossen sind; die Isolierplatten dazu geeignet sind auswechselbar und lösbar auf die Oberseite eines der prismatischen Blöcke (A) montiert zu werden, die Isolierplatten (K) mittels der Befestigungsmittel (Q, F) lösbar an den Blöcken (A) in der Weise befestigt sind, daß eine elektrische Verbindung zwischen einem leitenden Ansatz (M) einer Isolierplatte (K) und einer Fassung (E) hergestellt wird; und die Öffnungen (H, G) für das Einsetzen von Leitungssteckern (T) in den Seitenflächen des Blockes (A) und in jeder Fassung (E) gebildet sind.

2. Der Bausatz nach Anspruch 1 bei dem die Isolierplatten (K) aus einer Platte für gedruckte Schaltungen hergestellt sind, so daß die leitenden Ansätze Streifen (M) sind, die durch Ätzen hergestellt sind.

3. Der Bausatz nach Anspruch 2 bei dem die Blöcke (A) eine mit einer Aussparung versehene Oberseite (B) zur Aufnahme der Isolierplatten (K) haben.

4. Der Bausatz nach Anspruch 3 bei dem die Befestigungsmittel Schrauben (Q) sind, die durch Löcher (L) in den Isolierplatten in Sackbohrungen (F) aufgenommen werden, die in den Fassungen (E) gebildet sind.

5. Der Bausatz nach Anspruch 4 bei dem die leitenden Ansätze (M) stumpf an die Fassungen (E) anstoßen.

6. Der Bausatz nach Anspruch 4 bei dem die Löcher (L) von gekröpften Metallösen (L') umfaßt sind, wobei die Ösen in elektrischem Kontakt mit den leitenden Ansätzen (M) stehen.

7. Der Bausatz nach Anspruch 4 bei dem die Fassungen (E) zylindrisch, in Sackbohrungen im Block eingesetzt sind.

8. Der Bausatz nach Anspruch 1 bei dem die Bauelemente solche mit mehreren Anschlüssen sind, wie Widerstände, Transistoren und integrierte Schaltungen.

9. Der Bausatz nach Anspruch 1 einschließlich eines Verbindungsblockes (X), der eine einzelne Fassung mit vier der Öffnungen aufweist.

10. Der Bausatz nach Anspruch 1 bei dem die Öffnungen mit einer farbigen, die Polarität angebenden Unterlegscheibe (J) versehen sind.

**Revendications**

1. Un équipement pour le montage d'un circuit électrique, en particulier dans un but didactique, comprenant un choix de composants électriques ou électroniques (N, R, U, V, W), ces composants étant montés sur des blocs prismatiques (A) consistant en une matière rigide électriquement isolante, ayant des surfaces inférieure, latérales et supérieure, des réceptacles métalliques (E) installés dans les blocs (A), des moyens (Q, F) destinés à fixer les composants électriques ou électroniques (N, R, U, V, W) aux blocs (A), de manière amovible, pour établir ainsi une connexion électrique entre des bornes (P) de ces composants (N, R, U, V, W) et les réceptacles (E), et des ouvertures (H, G) formées dans les blocs (A) pour l'introduction dans ces ouvertures de fiches de fils (T), caractérisé en ce que chaque composant est monté sur une plaquette isolée (Q) portant des prolongements (M) d'une matière conductrice auxquels les bornes (P) du composant sont électriquement connectées; les plaquettes sont conçues de façon à être montées de manière amovible et interchangeable sur la surface supérieure de l'un des blocs prismatiques (A), ces plaquettes (K) sont fixées aux blocs (A) de façon amovible à l'aide des moyens de fixation (Q, F) d'une manière établissant une connexion électrique entre un prolongement conducteur (M) d'une plaquette (K) et un réceptacle (E); et les ouvertures (H, G) prévues pour l'introduction de fiches de fils (T) sont formées dans des surfaces latérales du bloc (A) et dans chaque réceptacle (E).

2. L'équipement selon la revendication 1, dans lequel les plaquettes (K) sont formées à partir d'une plaque de circuit imprimé, ce qui fait que les prolongements conducteurs sont des pistes (M) formées par attaque.

3. L'équipement selon la revendication 2, dans lequel les blocs (A) comportent une surface supérieure formant une cavité (B) pour recevoir les plaquettes (K).

4. L'équipement selon la revendication 3, dans lequel les moyens de fixation sont des vis (Q) qui traversent des trous (L) dans les plaquettes pour pénétrer dans des alésages taraudés (F) formés dans les réceptacles (E).

5. L'équipement selon la revendication 4, dans lequel les prolongements conducteurs (M) sont en contact avec les réceptacles (E) en étant appliqués contre ces derniers.

6. L'équipement selon la revendication 4, dans lequel les trous (L) sont encerclés par des oeillets métalliques (L'), et ces oeillets sont en contact électrique avec les prolongements conducteurs (M).

7. L'équipement selon la revendication 4, dans lequel les réceptacles (E) sont cylindriques et sont introduits dans des trous borgnes formés dans le bloc.

8. L'équipement selon la revendication 1, dans lequel les composants sont des composants à plusieurs bornes, tels que des résistances, des transistors et des circuits intégrés.

9. L'équipement selon la revendication 1, comprenant en outre un bloc de jonction (X) qui comporte un seul réceptacle avec quatre des ouvertures précitées.

10. L'équipement selon la revendication 1, dans lequel les ouvertures précitées sont munies d'une rondelle colorée d'indication de polarité (J).

FIG.1

FIG.2

FIG.3

FIG.4

FIG.5

FIG.6a

FIG.6b

FIG.6c

FIG. 7

FIG. 8

FIG.9

FIG.10

FIG.11

FIG.12

FIG.13a

FIG.13b

FIG.14

FIG.15

FIG.16

FIG.17

FIG.18

FIG.19

4